# EUROPEAN PATENT SPECIFICATION

(11) **EP 3 689 315 B1**
(45) Date of publication and mention of the grant of the patent: **17.12.2025**
(21) Application number: 18860864.0
(22) Date of filing: 26.09.2018
(51) Int. Cl.: A61G 7/05, A47C 27/12, D04H 3/16

(54) **MATTRESS FOR A CARE BED**
MATRATZE FÜR EIN PFLEGEBETT
MATELAS POUR LIT DE SOINS

(30) Priority: 26.09.2017 JP 2017184609
(43) Date of publication of application: 05.08.2020
(73) Proprietor: C-Eng Co., Ltd., Gamagori-shi, Aichi 443-0057 (JP)
(72) Inventor: TAKAOKA, Yoshihisa, Gamagori-shi, Aichi 443-0057 (JP)
(74) Representative: Mewburn Ellis LLP
(86) International application number: PCT/JP2018/035673
(87) International publication number: WO 2019/065729

(56) References cited:
- JP-A- 2003 310 395
- JP-A- 2006 097 223
- JP-A- 2014 168 683
- JP-A- 2017 014 681

## Description

### Technical Field

The present disclosure relates to a mattress for a care bed provided with a three-dimensional net-like structure.

### Background

With the recent technical development, commercially available motor-driven care beds mainly have part or all of three functions, a back raising function, a height adjustment function and a knee raising function. Commercially available motor-driven care beds include, for example, one motor-driven beds, two motor-driven beds, three motor-driven bends and four motor-driven beds. The functionality of the bed differs according to the number of the motors mounted on the bed. A latest demand is a care bed that has a large number of motors to change the form in multiple stages.

The disclosures of Patent Literatures 1 to 4 have been proposed in relation to a three-dimensional net-like structure that is used for such a care bed.

The disclosure of Patent Literature 1 proposes a cushion for a bed having a spring structure, with a view to implementing a seamless structure of cushions for the bed, to reduce a misalignment between the cushions and reduce a level difference between the cushions, and to reduce the weight of the cushions. There is provided a three-dimensional net-like structure of a spring structure that is formed by extrusion molding from a thermoplastic resin used as a material or as a main material to have continuous hollow wires or solid wires that are tangled in loops at random and that are partly thermally bonded to each other. The three-dimensional net-like structure has a plurality of continuous grooves that are formed to pass through in a short direction from a lower face to an upper face of the three-dimensional net-like structure and that are arranged at predetermined intervals or at appropriate intervals along a longitudinal direction. When the three-dimensional net-like structure is bend upward, the grooves are expanded.

The disclosure of Patent Literature 2 provides a core material for a mattress having excellent angle adjustment performance and a mattress using the core material. The core material for the mattress is a stacked structure formed by stacking multiple layers of three-dimensional net-like structures. The respective layers of the three-dimensional net-like structures are continuously or intermittently fixed at one end of the stacked structure, while being not fixed at the other end of the stacked structure.

The disclosure of Patent Literature 3 provides a three-dimensional net-like structure made of a thermoplastic resin, with a view to smoothly bending the three-dimensional net-like structure. The three-dimensional net-like structure is produced from polyethylene that has a swelling ratio depending on a shear rate and has a curled spring structure formed by causing filaments to be brought into contact with and tangled with one another irregularly. The three-dimensional net-like structure has a three-dimensional streak-like sparse/ dense structure in a lateral direction relative to an extrusion direction and has a wire diameter of 0.2 to 1.3 mm ϕ and a bulk density of 0.01 to 0.2 g/cm³. The swelling ratio is measured by extruding molten polyethylene into filaments from a capillary having an inner bore D₁ of 1.0 mm ϕ and a length of 10 mm at a temperature of 190°C and then cooling down the extruded polyethylene filaments. The swelling ratio is expressed as D₂/D₁ relative to the shear rate, where D₂ denotes a diameter of cut planes of the filaments.

The disclosure of Patent Literature 4 provides a three-dimensional net-like structure made of a thermoplastic resin, with a view to smoothly bending the three-dimensional net-like structure. The three-dimensional net-like structure is produced from polyester that has a swelling ratio depending on a shear rate and has a curled spring structure formed by causing filaments to be brought into contact with and tangled with one another irregularly. The three-dimensional net-like structure has a three-dimensional streak-like sparse/ dense structure in a lateral direction relative to an extrusion direction and has a wire diameter of 0.2 to 1.3 mm ϕ and a bulk density of 0.01 to 0.2 g/cm³. The swelling ratio is measured by extruding molten polyester into filaments from a capillary having an inner bore D₁ of 1.0 mm ϕ and a length of 10 mm at a temperature of 210°C and then cooling down the extruded polyester filaments. The swelling ratio is expressed as D₂/D₁ relative to the shear rate, where D₂ denotes a diameter of cut planes of the filaments.

### Citation List

### Patent Literature

Patent Literature 1: JP 2006-6924A
Patent Literature 2: JP 2008-295824A
Patent Literature 3: WO 2013/ 088736A
patent Literature 4: WO 2013/ 088737A

Other examples of known mattresses are disclosed in JP 2006-097223A and JP 2003-310395A.

### Summary

### Technical Problem

The latest general or medical mattress, however, uses three or more motors to achieve various motions of a back portion and a leg portion and the user's complicated motions during eating, as well as simple back raising motions. The conventional three-dimensional net-like structure is unlikely to respond to such complicated motions. Especially there is a need to hold the human body in a specific angle, with a view to preventing aspiration pneumonia. The three-dimensional net-like structure is thus required to be smoothly moved in the vertical direction and in the lateral direction and to follow the motion of a bed main body.

The disclosures of Patent Literature 1, however, needs to cut the cushion for the bed into respective parts in multiple stages and furthermore fails to provide the sufficient bending properties for smooth bending. The disclosures of Patent Literatures 2 to 4, on the other hand, fail to provide the performance of following the complicated motions of the bed main body and provide the sufficient performance for smoothly bending the mattress in multiple stages. Additionally, there is a problem of the followability with generation of a gap between the driving bottom board of the care bed and the mattress. There is accordingly a demand for a mattress that is suitable for a care bed that uses a plurality of motors and drives a driving bottom board in a complicated manner.

An object of the present disclosure is accordingly to enhance the followability of a three-dimensional net-like structure made of a thermoplastic resin to a care bed provided with the three-dimensional net-like structure, in response to a complicated motion of a bed main body by a motor or a user's specific motion.

### Solution to Problem

The present invention provides a mattress for a care bed as defined in claim 1. Preferred features of the invention are set out in the dependent claims.

Available examples of the thermoplastic resin include polyethylene (PE), polypropylene (PP) and polyester-based thermoplastic elastomers (TPEE, TPC). The thermoplastic resin may be a mixture of an elastomer having compatibility with olefin or propylene and the above material. This material has high transparency and enables stains on a core material of a mattress to be readily found. The elasticity is adjustable by changing the mixing ratio.

The three-dimensional net-like structure preferably has a hysteresis loss of 20 to 80%.

In the case where polyethylene is used as the thermoplastic resin, concrete examples include general polyethylenes, linear low-density polyethylene (LLDPE) and very low density polyethylene (VLPE). The density of the polyethylene material is preferably 0.82 to 0.95 g/cm³ and is more preferably 0.85 to 0.94 g/cm³.

In the case where polyethylene is used as the thermoplastic resin, there is provided a three-dimensional net-like structure that is a polyester block copolymer (A) mainly comprising, as primary components: a high melting point crystalline polymer segment (a) mainly comprised of a crystalline aromatic polyester unit; and a low melting point polymer segment (b) mainly comprised of an aliphatic polyether unit and/or an aliphatic polyester unit.

A thermoplastic resin having a swelling ratio in a specific range described in either Patent Literature 3 or Patent Literature 4 may be employed as the thermoplastic resin.

The filament may be solid or may be hollow.

### Advantageous Effects

The above aspect of the present disclosure has the plurality of three-dimensional intersecting regions formed by the sparse structural units of the first three-dimensional sparse/ dense structure and the second three-dimensional sparse/ dense structure. This configuration enhances the followability of the three-dimensional net-like structure to a care bed having a driving bottom board that is driven by a motor. This configuration also reduces a gap between the driving bottom board of the care bed and a bottom face of the three-dimensional net-like structure by a back raising operation of the care bed. This configuration enables the sparsity/ density degree of the three-dimensional net-like structure to be adjusted according to the specification of the care bed. Accordingly, the aspect of the present disclosure is applicable to hospitals as well as general care beds.

The above aspect of the present disclosure has the plurality of three-dimensional intersecting regions formed by the sparse structural units of the first three-dimensional sparse/ dense structure, the second three-dimensional sparse/ dense structure and the third three-dimensional sparse/ dense structure. This configuration enhances the followability of the three-dimensional net-like structure to a care bed having a driving bottom board that is driven by a motor and also enhances restriction of a lateral motion of the human body.

### Brief Description of Drawings

Fig. 1 is a perspective view illustrating a three-dimensional net-like structure for a care bed according to a first embodiment of the present disclosure;
Fig. 2 is a perspective view illustrating the three-dimensional net-like structure (with reference signs for dimensions);
Fig. 3 is an exploded perspective view illustrating a first three-dimensional sparse/ dense structure of the three-dimensional net-like structure;
Fig. 4 is an exploded perspective view illustrating a second three-dimensional sparse/ dense structure of the three-dimensional net-like structure;
Fig. 5 is a perspective view illustrating a three-dimensional net-like structure for a care bed according to a second embodiment of the present disclosure;
Fig. 6 is a front view illustrating a three-dimensional net-like structure according to a modification of the second embodiment for the care bed;
Fig. 7 is a perspective view illustrating a three-dimensional net-like structure for a care bed according to a third embodiment of the present disclosure;
Fig. 8 is a perspective view illustrating the three-dimensional net-like structure (with reference signs for dimensions);
Fig. 9 is an exploded perspective view illustrating a first three-dimensional sparse/ dense structure of the three-dimensional net-like structure;
Fig. 10 is an exploded perspective view illustrating a second three-dimensional sparse/ dense structure of the three-dimensional net-like structure;
Fig. 11 is an exploded perspective view illustrating a third three-dimensional sparse/ dense structure of the three-dimensional net-like structure;
Fig. 12 is a perspective view illustrating a three-dimensional net-like structure for a care bed according to a fourth embodiment of the present disclosure;
Fig. 13 is a perspective view illustrating the three-dimensional net-like structure (with reference signs for dimensions);
Fig. 14 is an exploded perspective view illustrating a first three-dimensional sparse/ dense structure of the three-dimensional net-like structure;
Fig. 15 is an exploded perspective view illustrating a second three-dimensional sparse/ dense structure of the three-dimensional net-like structure;
Fig. 16 is an exploded perspective view illustrating a third three-dimensional sparse/ dense structure of the three-dimensional net-like structure; and
Fig. 17 is a perspective view illustrating the three-dimensional net-like structure for the care bed according to the fourth embodiment of the present disclosure in a user state.

### Description of Embodiments

A three-dimensional net-like structure 101 according to a first embodiment is applied as a core material of a mattress for a care bed. This three-dimensional net-like structure 101 has a curled spring structure formed by causing filaments of a thermoplastic resin to be brought into contact with and tangled with one another irregularly at contact points and is configured to have a wire diameter of 0.1 to 2.0 mm ϕ and a bulk density of 0.01 to 0.15 g/cm³. The three-dimensional net-like structure 101 has a width M of 60 to 200 cm, a length L of 90 to 220 cm, and a thickness of 10 to 100 cm.

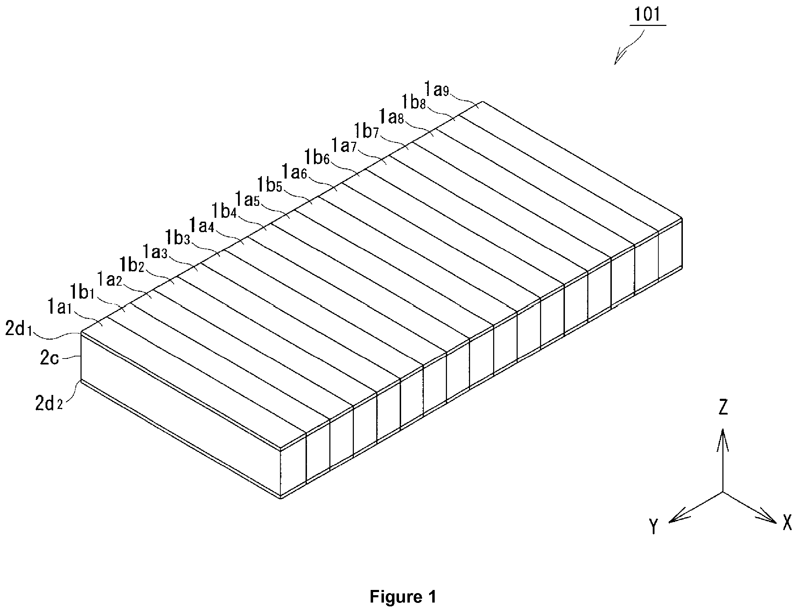

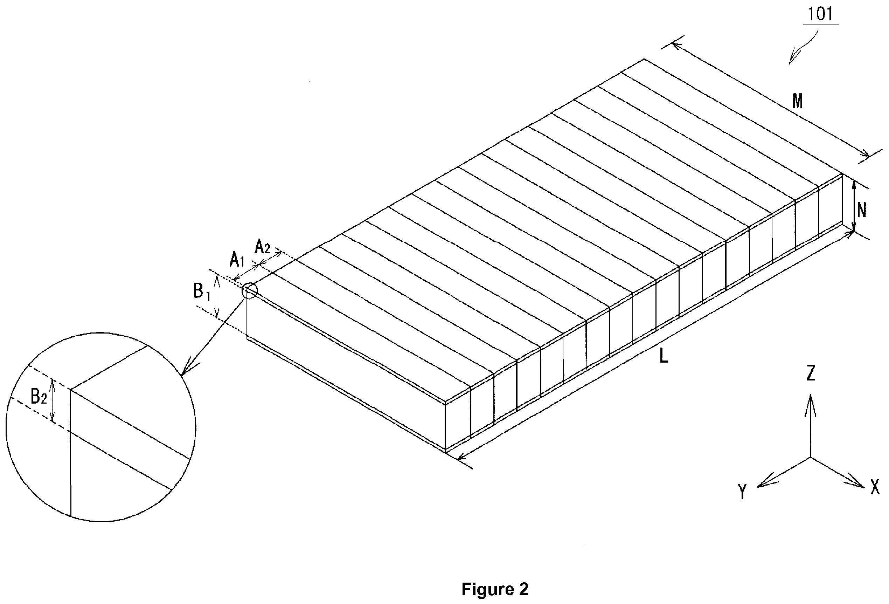

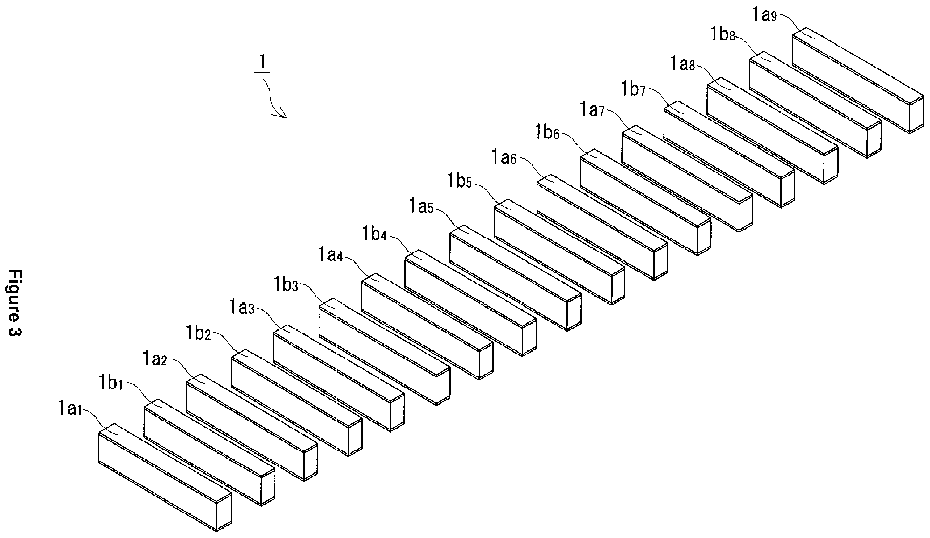

As shown in Figs. 1 to 4, the three-dimensional net-like structure 101 has a first three-dimensional sparse/ dense structure 1 provided as an alternately layered configuration of structural units 1a₁ to 1a₉ that are sparse in an extrusion direction Y and structural units 1b₁ to 1b₈ that are dense in the extrusion direction Y. In this first three-dimensional sparse/ dense structure 1, a bulk density δ₁ of the sparse structural units 1a₁ to 1a₉ is 0.01 to 0.08 g/cm³ and a bulk density δ₂ of the dense structural units 1b₁ to 1b₈ is 0.03 to 0.10 g/cm³. A ratio δ₂/ δ₁ of the bulk density of the dense structural units 1b₁ to 1b₈ to the bulk density of the sparse structural units 1a₁ to 1a₉ is 1.01 to 5. A length A₁ of the sparse structural units 1a₁ to 1a₉ is 1 to 30 cm, and a length A₂ of the dense structural units 1b₁ to 1b₈ is 3 to 30cm. A ratio A₂/ A₁ of the length of the dense structural units 1b₁ to 1b₈ to the length of the sparse structural units 1a₁ to 1a₉ is 0.5 to 3.

As shown in Figs. 1 to 4, the three-dimensional net-like structure 101 has a second three-dimensional sparse/ dense structure 2 provided as a layered configuration of a structural unit 2c that is sparse in a thickness direction Z and structural units 2d₁ and 2d₂ that are dense in the thickness direction Z. In the second three-dimensional sparse/ dense structure 2 applied as a core material for the care bed, a bulk density of the sparse structural unit is 0.01 to 0.08 g/cm³ and a bulk density δ₄ of the dense structural units is 0.03 to 0.10 g/cm³. A ratio δ₄/ δ₃ of the bulk density of the dense structural units to the bulk density of the sparse structural unit is 1.01 to 5, is preferably 1.1 to 4 and is especially preferably 1.15 to 2. A thickness of the sparse structural unit is 0.5 to 10 cm, and a thickness of the dense structural unit is 2 to 30 cm. A ratio B₂/B₁ of the thickness of the dense structural unit 2d to the thickness of the respective sparse structural units is 0.2 to 60. The first three-dimensional sparse/ dense structure and the second three-dimensional sparse/ dense structure described above provide the three-dimensional net-like structure that includes a plurality of three-dimensional intersecting regions formed by the sparse structural units. This configuration enhances the followability of the three-dimensional net-like structure 101 to a driving bottom board of the care bed.

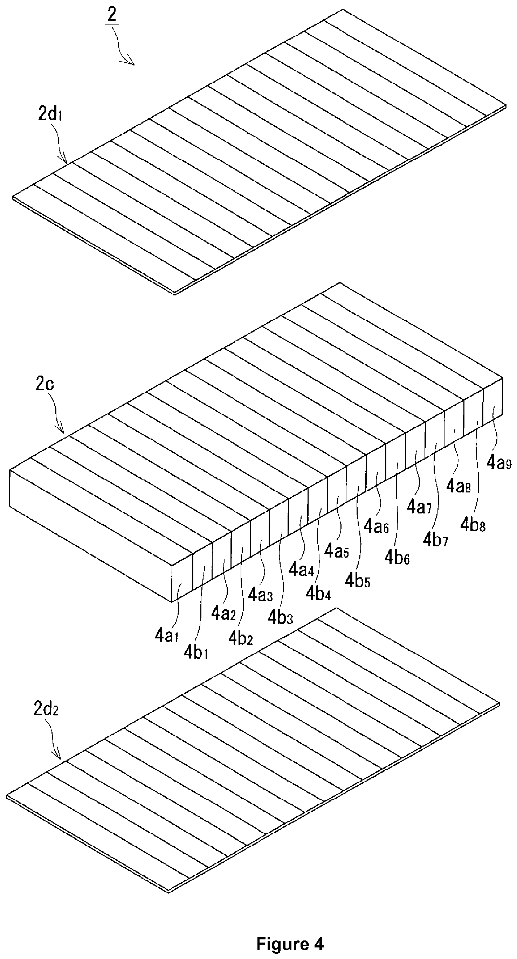

As shown in Fig. 4, the three-dimensional net-like structure 101 has a plurality of three-dimensional sparse intersecting regions 4 including regions 4a₁ to 4a₉ of the lower bulk density that are formed by the respective sparse structural units of the first three-dimensional sparse/ dense structure 1 and the second three-dimensional sparse/ dense structure 2. The bulk density of these regions is lower than the bulk density of the structural units 2d₁ and 2d₂ and the bulk density of regions 4b₁ to 4b₈ that are included in the plurality of three-dimensional sparse intersecting regions 4 and that are respectively placed between the adjacent regions 4a₁ to 4a₉. The above embodiment describes the three-layered configuration. The above description is, however, also applicable to a two-layered sparse/ dense configuration or to a four- or more-layered sparse/ dense configuration.

With regard to a detailed manufacturing method of the three-dimensional net-like structure, refer to commonly assigned patent publications, for example, JP 4350286B and US Patent 7625629B. The sparse and dense configuration of the first three-dimensional sparse/ dense structure is basically formed by varying the speed of a roller or a caterpillar member. The sparse and dense configuration of the second three-dimensional sparse/ dense structure or a third three-dimensional sparse/ dense structure is formed by regulating the number of nozzle holes per unit area and/or the diameter of the nozzle hole.

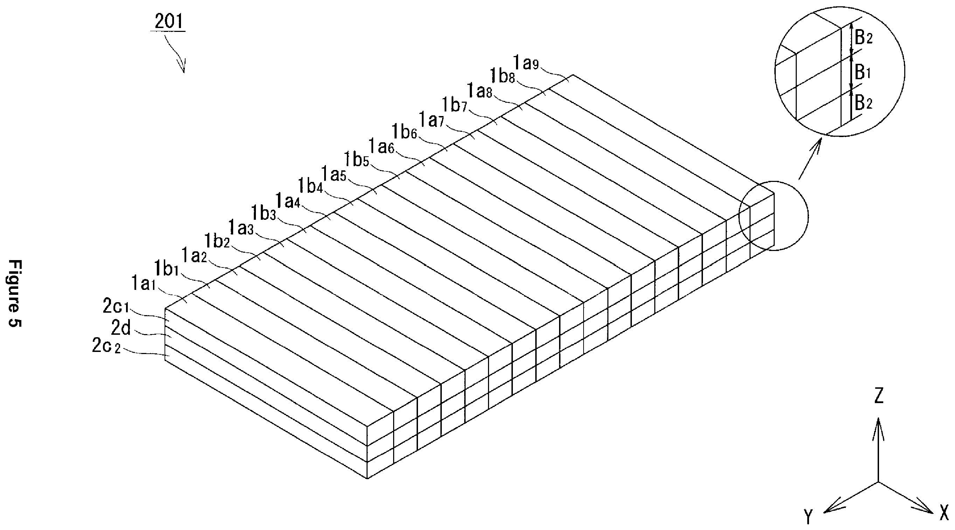

The following describes a three-dimensional net-like structure 201 for a care bed according to a second embodiment with reference to Fig. 5. This three-dimensional net-like structure 201 basically has a similar configuration to that of the three-dimensional net-like structure 101. The following accordingly describes difference from the first embodiment with employing the illustration and the description of the first embodiment with regard to a common configuration. The second embodiment is configured to have sparse structural units 2c₁ and 2c₂ and a dense structural unit 2d by changing the positions of the sparse and dense structures in the thickness direction Z from the positions of the sparse structural unit 2c and the dense structural units 2d₁ and 2d₂ of the second three-dimensional sparse/ dense structure 2 of the first embodiment. According to the second embodiment, the dense structural unit 2d forms an intermediate layer, and the sparse structural units 2c₁ and 2c₂ are provided on surface layer sides. Providing the sparse structural units 2c₁ and 2c₂ as the surface layers enhances the followability to the care bed. Forming the dense structural unit 2d as the intermediate layer prevents separation of the fused portions of the filaments of the sparse structural unit 2c₁ and also enhances the followability to the care bed.

As shown in Fig. 5, the three-dimensional net-like structure 201 has a second three-dimensional sparse/ dense structure 2 provided as a layered configuration of the structural units 2c₁ and 2c₂ that are sparse in the thickness direction Z and the structural unit 2d that is dense in the thickness direction Z. In this second three-dimensional sparse/ dense structure 2, a bulk density δ₃ of the sparse structural units 2c is 0.01 to 0.08 g/cm³ and a bulk density δ₄ of the dense structural unit 2d is 0.03 to 0.10 g/cm³. A ratio δ₄/ δ₃ of the bulk density of the dense structural unit 2d to the bulk density of the sparse structural units 2c₁ and 2c₂ is 1.01 to 5, is preferably 1.1 to 4 and is especially preferably 1.15 to 2. A thickness B₁ of the sparse structural units 2c₁ and 2c₂ is 0.5 to 10 cm, and a thickness B₂ of the dense structural unit 2d is 2 to 30 cm. A ratio B₂/B₁ of the thickness of the dense structural unit 2d to the thickness of the respective sparse structural units 2c₁ and 2c₂ is 0.2 to 60. Providing the sparse configuration on the surface layer sides and the dense configuration as the intermediate layer in appropriate ranges of the bulk densities enables the three-dimensional net-like structure 101 to be bent readily. The above embodiment describes the three-layered configuration. The above description is, however, also applicable to a two-layered sparse/ dense configuration or to a four- or more-layered sparse/ dense configuration.

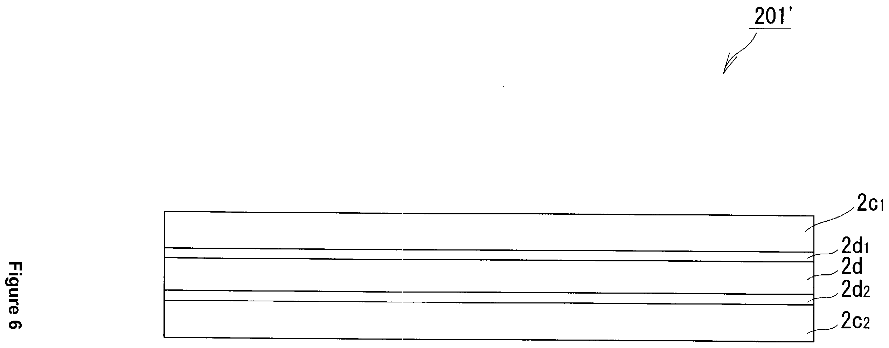

The following describes a three-dimensional net-like structure 201' provided according to a modification of the three-dimensional net-like structure 201 of the second embodiment. As shown in Fig. 6, in order to enhance the followability to the care bed, dense structural units 2d₁ and 2d₂ are respectively provided on an upper surface and a lower surface of the dense structural unit 2d. The structural units 2d₁ and 2d₂ are provided as high density layers having a higher bulk density than a bulk density of an intermediate layer placed between the structural units 2d₁ and 2d₂ in a vertical direction. The structural units 2d₁ and 2d₂ may be provided on respective sides of the dense structural unit 2d, or only one structural unit 2d1 or 2d2 may be provided on a single side.

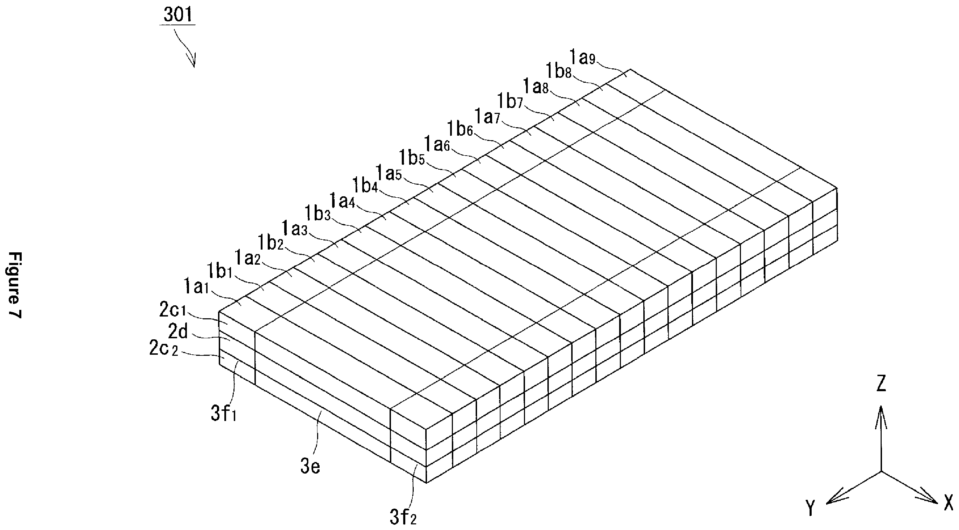

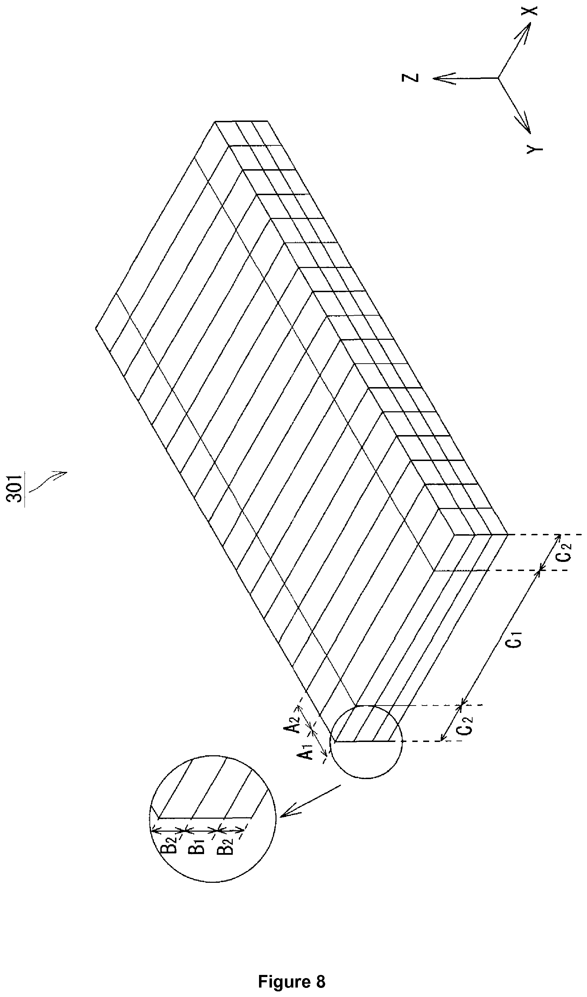

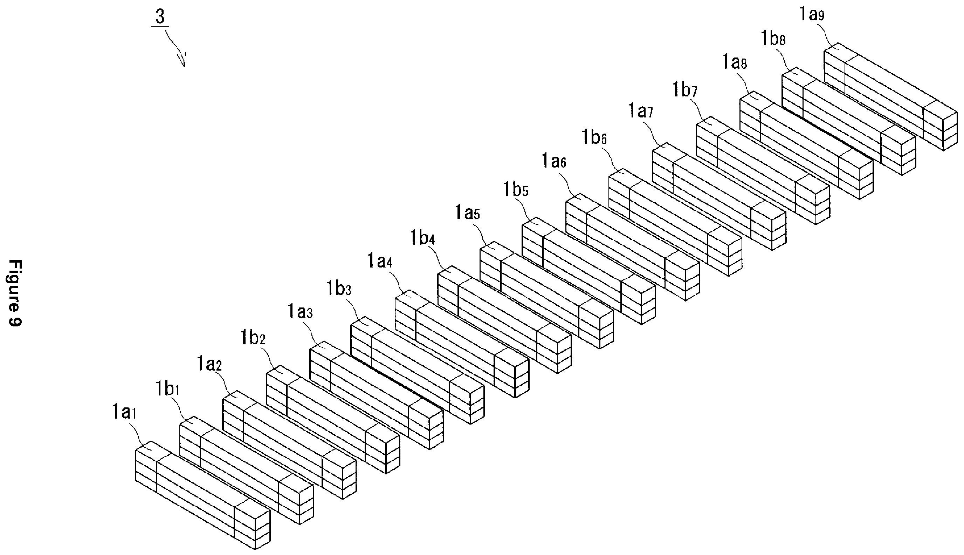

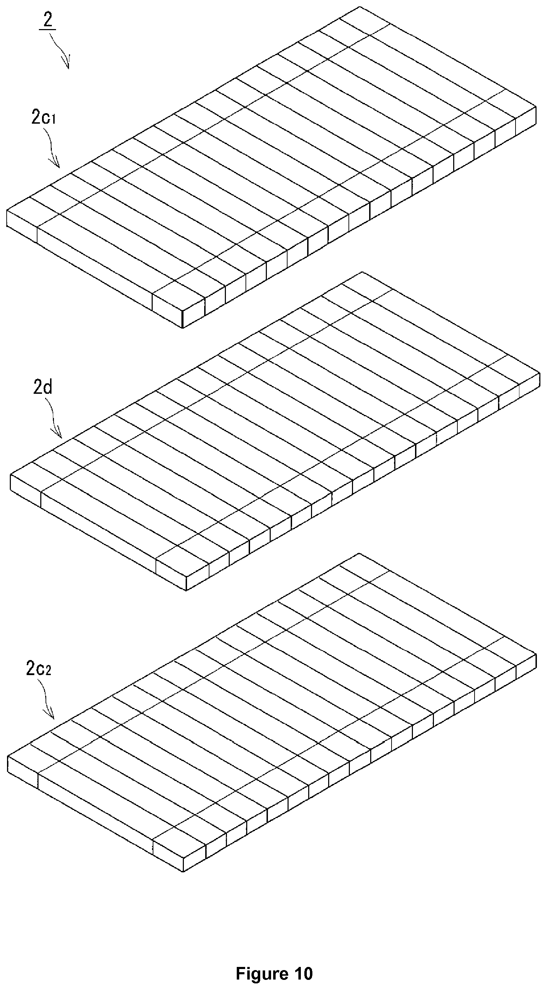

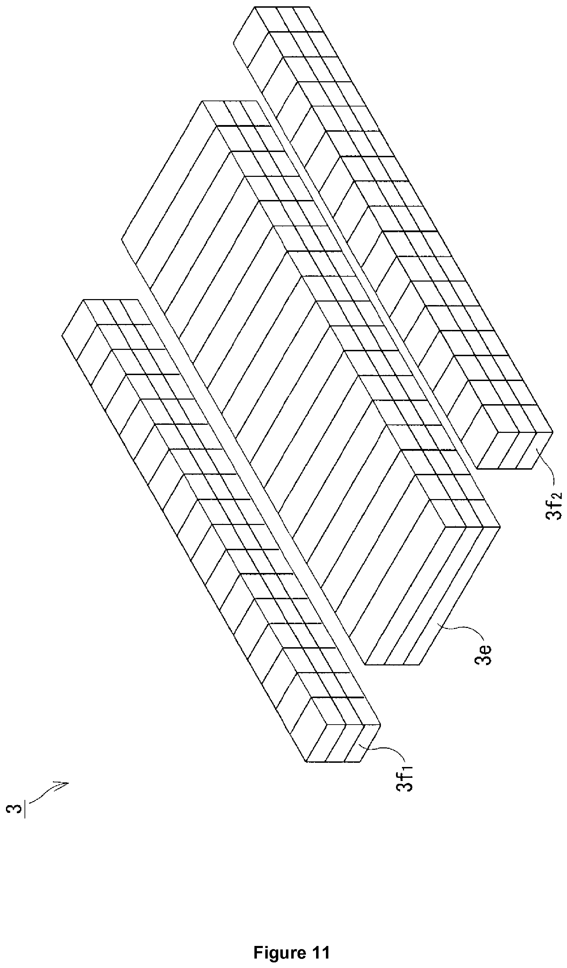

The following describes a three-dimensional net-like structure 301 for a care bed according to a third embodiment with reference to Figs. 7 to 11. This three-dimensional net-like structure 301 basically has a similar configuration to that of the three-dimensional net-like structure 201. The following accordingly describes difference from the second embodiment with employing the illustration and the description of the second embodiment with regard to a common configuration. The difference is that a third three-dimensional sparse/ dense structure 3 is additionally formed in the three-dimensional net-like structure of the second embodiment. Although this embodiment basically employs the configuration of the second embodiment, the configuration of the first embodiment may alternatively be employed. The third three-dimensional sparse/ dense structure is provided by changing the diameter of the nozzle hole and/or by varying the number of nozzle holes.

The three-dimensional net-like structure 301 has the third three-dimensional sparse/ dense structure 3 provided as a layered configuration of a structural unit 3e that is sparse in a direction X perpendicular to the extrusion direction Y and structural units 3f₁ and 3f₂ that are dense in the direction X. In this third three-dimensional sparse/ dense structure 3, a bulk density δ₅ of the sparse structural unit 3e is 0.009 to 0.08 g/cm³ and a bulk density δ₆ of the dense structural unit 3f₁ and 3f₂ is 0.0128 to 0.10 g/cm³. A ratio δ₆/ δ₅ of the bulk density δ₆ of the dense structural units 3f₁ and 3f₂ to the bulk density δ₅ of the sparse structural units 3e is 1.01 to 5, is preferably 1.03 to 4 and is especially preferably 1.05 to 3. A width C₁ of the sparse structural unit 3e is 40 to 100 cm, and a width C₂ of the respective dense structural units 3f₁ and 3f₂ is 4 to 30 cm. A ratio C₂/ C₁ of the width of the respective dense structural units 3f₁ and 3f₂ to the width of the sparse structural unit 3e is 0.02 to 30.

The configuration of the three-dimensional net-like structure 301 holds the human body from the respective sides to restrict a lateral motion of the human body, in addition to enhancing the followability to the care bed.

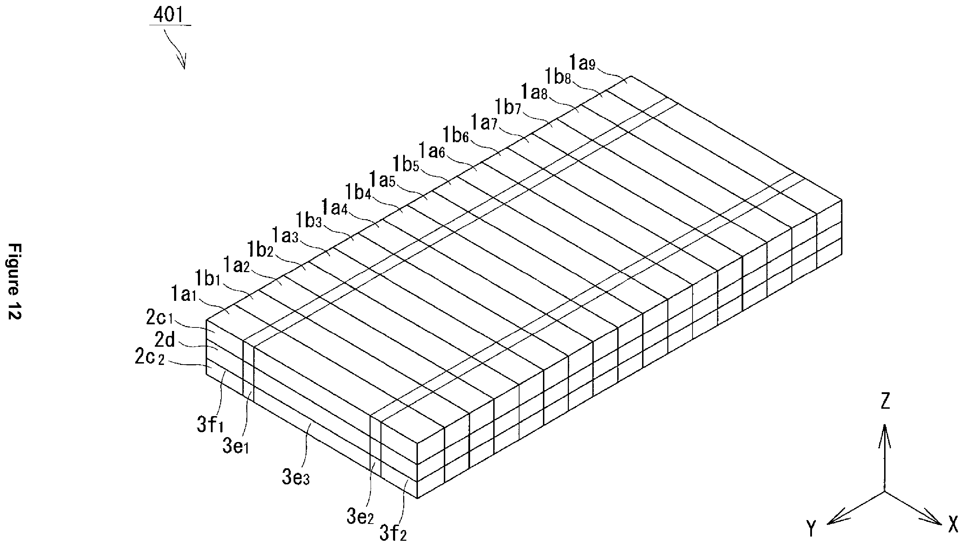

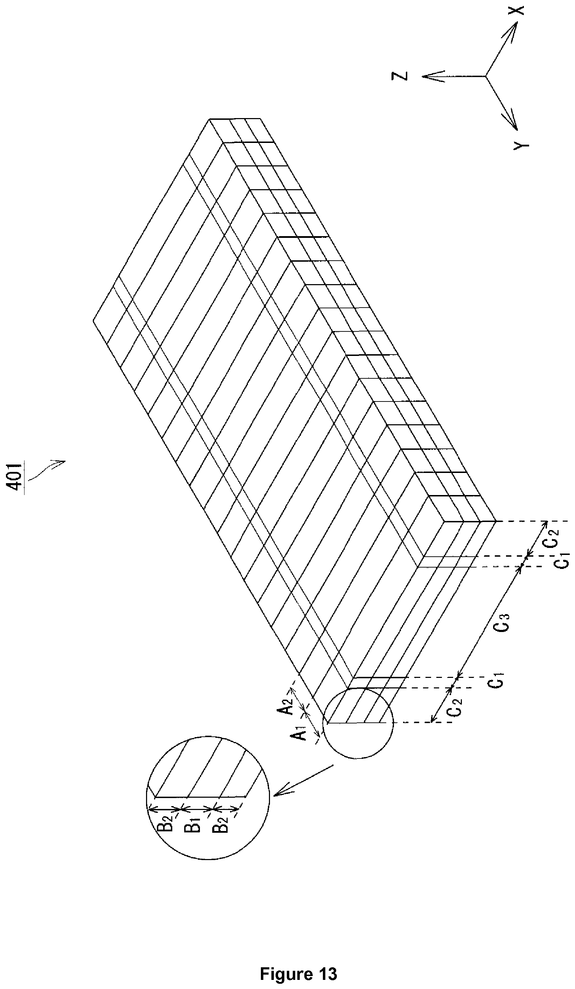

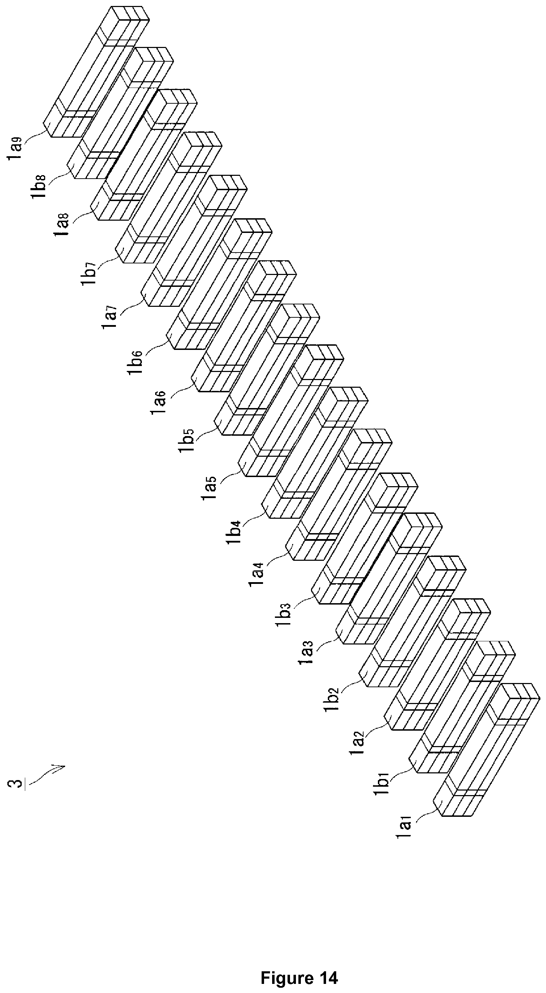

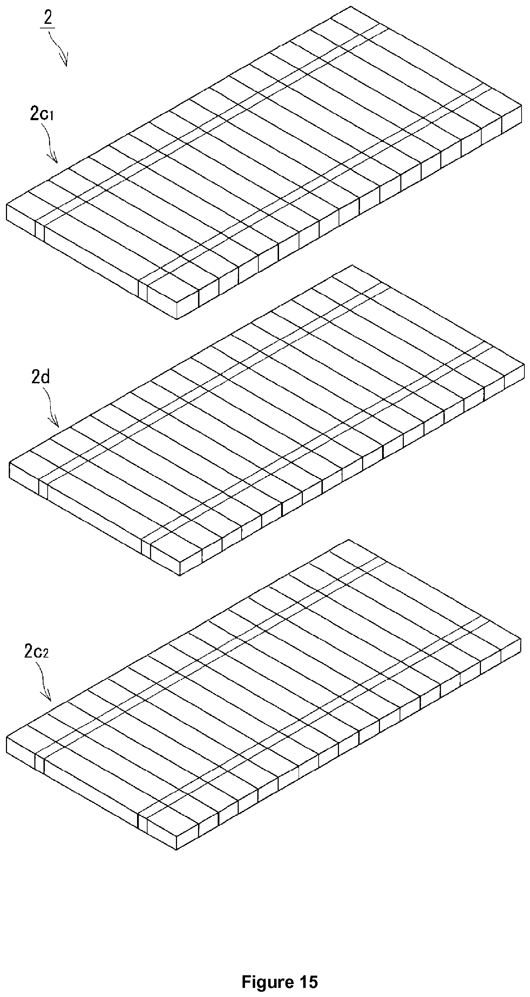

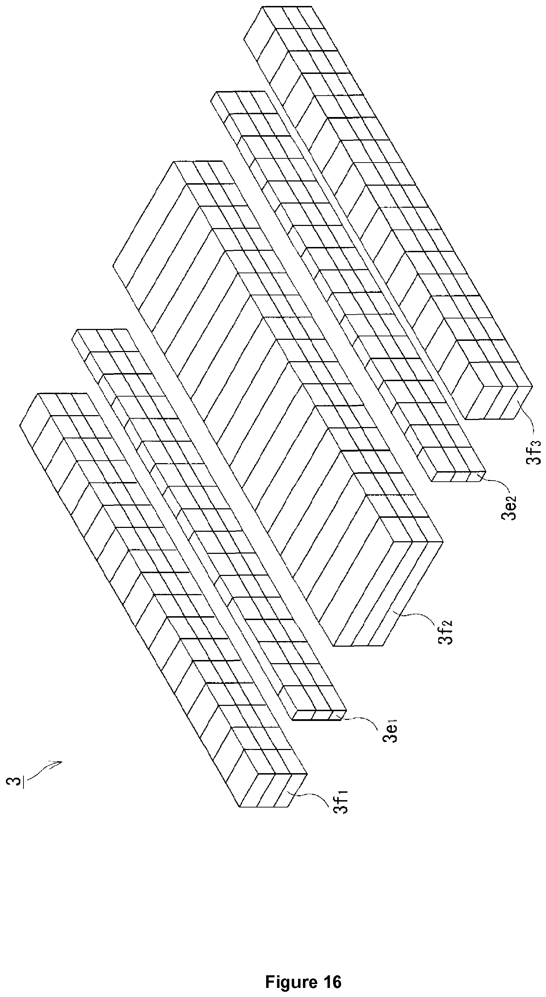

The following describes a three-dimensional net-like structure 401 for a care bed according to a fourth embodiment with reference to Figs. 12 to 17. This three-dimensional net-like structure 401 basically has a similar configuration to that of the three-dimensional net-like structure 301. The following accordingly describes difference from the third embodiment with employing the illustration and the description of the third embodiment with regard to a common configuration. The difference is that another sparse structure is added to the third three-dimensional sparse/ dense structure 3 of the three-dimensional net-like structure of the third embodiment. Although this embodiment basically employs the configuration of the third embodiment, the configuration of the first embodiment may alternatively be employed.

The three-dimensional net-like structure 401 has a third three-dimensional sparse/ dense structure 3 provided as an alternately layered configuration of structural units 3e₁, 3e₂ and 3e₃ that are sparse in the direction X perpendicular to the extrusion direction Y and structural units 3f₁ and 3f₂ that are dense in the direction X. In this third three-dimensional sparse/ dense structure 3, bulk densities δ₅ of the sparse structural units 3e₁, 3e₂ and 3e₃ are 0.009 to 0.07 g/cm³ and a bulk density δ₆ of the dense structural unit 3f₁ and 3f₂ is 0.0128 to 0.09 g/cm³. The bulk densities of the sparse structural units 3e₁ and 3e₂ are set to be lower than the bulk density of the sparse structural unit 3e₃. A ratio δ₆/ δ₅ of the bulk density δ₆ of the dense structural units 3f₁ and 3f₂ to the bulk densities δ₅ of the sparse structural units 3e₁, 3e₂ and 3e₃ is 1.01 to 5, is preferably 1.03 to 4 and is especially preferably 1.05 to 3. A total width C₁ of the sparse structural units 3e₁, 3e₂ and 3e₃ is 40 to 100 cm. The sparse structural units 3e₁ and 3e₂ are set to be narrower than the sparse structural unit 3e₃. A width C₂ of the respective dense structural units 3f₁ and 3f₂ is 4 to 30 cm. A ratio C₂/ C₁ of the width of the respective dense structural units 3f₁ and 3f₂ to the total width of the respective sparse structural units 3e₁, 3e₂ and 3e₃ is 0.02 to 30.

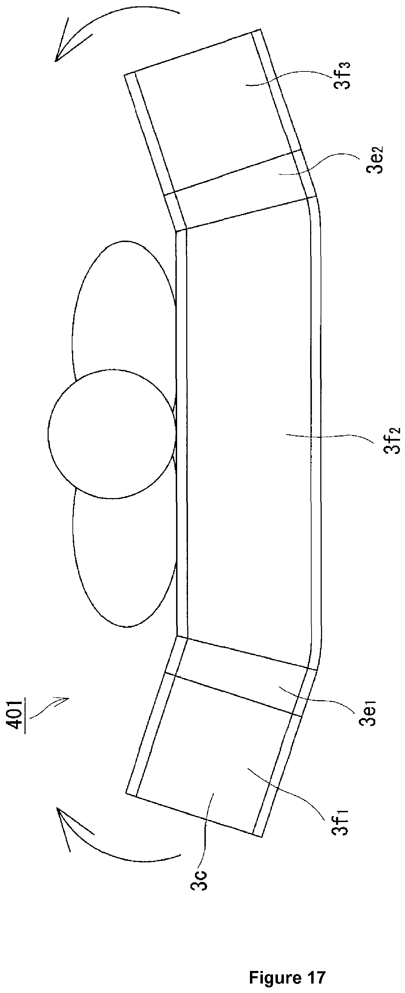

As shown in Fig. 17, as one example, the three-dimensional net-like structure 401 for the care bed may hold the human body from respective sides to restrict a lateral motion of the human body.

### Example 1

The following describes conditions of an extruding machine and a drawing machine used to manufacture a three-dimensional net-like structure for a care bed that is made of polyethylene as a material. A three-dimensional net-like structure having a capillary diameter (nozzle diameter) of 1.6 mm ϕ, a thickness of 80 mm, a width of 83 cm and a length of 195 cm corresponding to a second three-dimensional sparse/ dense structure was manufactured by an extruding machine having a screw diameter of 90 mm. The following shows the ranges of the drawing speed and the bulk density that provide a three-dimensional net-like structure bent preferably at a screw rotation speed of 44.0 rpm (at an extrusion amount of about 125 kg per hour). The drawing speed of the drawing machine with regard to a first three-dimensional sparse/ dense structure is 8.93 mm/sec for the dense structural units and 9.80 mm/sec for the sparse structural units. Controlling the drawing speed provides the first three-dimensional sparse/ dense structure. In the first three-dimensional sparse/ dense structure having a surface layer, the surface layer having a bulk density of 0.05 g/cm³ and a filament diameter of 0.7 mm ϕ provided the preferably bent three-dimensional net-like structure. This combination of the bulk density and the filament diameter enables a second three-dimensional sparse/ dense structure to be provided in the three-dimensional net-like structure by changing the nozzle diameter, the number of nozzle holes and the like to vary the bulk density in the thickness direction.

The three-dimensional net-like structure described above has the first three-dimensional sparse/ dense structure provided as an alternately layered configuration of sparse structural units having a bulk density of 0.050 g/cm³ and dense structural units having a bulk density of 0.055 g/cm³ at intervals of 5 cm in the extrusion direction. The second three-dimensional sparse/ dense structure includes, in the thickness direction, a sparse structural unit provided to have a bulk density of 0.048 g/cm³ in a thickness of 2 cm as a surface layer and an adjacent dense structural unit provided to have a bulk density of 0.054 g/cm³ in a thickness of 6 cm. The three-dimensional net-like structure of the present disclosure was applied to a mattress (made of polyethylene), and a check test was performed to check the followability of this mattress to a bed. A bed manufactured by PLATZ Co., Ltd. (P100-3) was used to measure the followability of the mattress to the bed. The bed was configured to be angle adjustable at two positions, i.e., at a back portion and at a hip portion. The angle of the back portion was set to 40 degrees, and the angle of the hip portion was set to 20 degrees. A vertical distance between a driving bottom board of the bed and a bottom face of the mattress was measured at the hip portion. In the mattress of the three-dimensional net-like structure according to the present disclosure, the maximum value of the vertical distance from the driving bottom board of the care bed to the bottom face of the mattress was 4.6 cm. Reduction of the distance enhances the followability. The followability in X, Y and Z directions to a bed FB640 manufactured by France Bed Co., Ltd. was also checked with regard to a structure provided with a third three-dimensional sparse/ dense structure including dense structural units provided to have a bulk density of 0.080 g/cm³ in a width of 6 cm on respective ends in the direction X perpendicular to the extrusion direction and a sparse structural unit provided to have a bulk density of 0.053 g/cm³ in a width of 71 cm in between. This check test gave a similar result.

### Comparative Example 1

A polyethylene mattress of a three-dimensional net-like structure having the same dimensions as those in Example 1 had a bulk density of 0.050 g/cm³ in a head portion having a length of 65 cm, a bulk density of 0.055 g/cm³ in a back portion subsequent to the head portion having a length of 65 cm, and a bulk density of 0.050 g/cm³ in a leg portion subsequent to the back portion having a length of 65 cm in the longitudinal direction Y of the mattress. As the manufacturing conditions, the drawing speed was controlled in the same manner as that of Example 1, and the density of the nozzle holes was fixed. A bed manufactured by PLATZ Co., Ltd. (P100-3) was used to measure the followability of the mattress to the bed. In the mattress of this three-dimensional net-like structure, the maximum value of the vertical distance from the driving bottom board of the care bed to the bottom face of the mattress was 6 cm. This value was larger than the value of Example 1 by 1.4 cm. This indicates the poorer followability.

### Industrial Applicability

The three-dimensional net-like structure of the present disclosure is employed for a care bed having a driving bottom board that is driven by a motor.

### Reference Signs List

1... three-dimensional sparse/ dense structure
1a₁ to 1a₉... structural units
1b₁ to 1b₈... structural units
2... three-dimensional sparse/ dense structure
2c... structural unit
2c₁, 2c₂... structural units
2d... structural unit
2d₁, 2d₂... structural units
3... three-dimensional sparse/ dense structure
3e₁, 3e₂... structural units
3f₁ to 3f₃... structural units
4a₁ to 4a₉... regions
4b₁ to 4b₈... regions
101... three-dimensional net-like structure
201... three-dimensional net-like structure
201'... three-dimensional net-like structure
301... three-dimensional net-like structure
401... three-dimensional net-like structure
501... three-dimensional net-like structure

## Claims

1. A mattress for a care bed, comprising
a three-dimensional net-like structure (401) configured from a first three-dimensional sparse/ dense structure (1), and a second three-dimensional sparse/ dense structure (2) and a third three-dimensional sparse/ dense structure (3) , wherein
the three-dimensional net-like structure (401) has a curled spring structure formed by causing filaments of a thermoplastic resin to be brought into contact with and tangled with one another irregularly at contact points and is configured to have a wire diameter of 0.1 to 2.0 mm ϕ and a bulk density of 0.01 to 0.15 g/cm³,
the first three-dimensional sparse/ dense structure (1) being provided as an alternately layered configuration of a length-wise sparse structural unit (1a₁-1a₉) and a length-wise dense structural unit (1b₁-1b₈) in a length direction of the mattress, wherein
the first three-dimensional sparse/ dense structure (1) has a bulk density of 0.01 to 0.08 g/cm³ for the length-wise sparse structural unit (1a₁-1a₉), a bulk density of 0.03 to 0.10 g/cm³ for the length-wise dense structural unit (1b₁-1b₈), a ratio of the bulk density of the length-wise dense structural unit (1b₁-1b₈) to the bulk density of the length-wise sparse structural unit (1a₁-1a₉) of 1.01 to 5, the length-wise sparse structural unit (1a₁-1a₉) has a length of 1 to 50 cm in the length direction of the mattress, the length-wise dense structural unit (1b₁-1b₈) has a length of 3 to 60 cm in the length direction of the mattress, and a ratio of the length of the length-wise dense structural unit (1b₁-1b₈) to the length of the length-wise sparse structural unit (1a₁-1a₉) is 0.1 to 10,
the second three-dimensional sparse/ dense structure (2) being provided as an alternately layered configuration of a thickness-wise sparse structural unit (2c₁, 2c₂) and a thickness-wise dense structural unit (2d) in a thickness direction of the mattress, wherein
the second three-dimensional sparse/ dense structure (2) has a bulk density of 0.01 to 0.08 g/cm³ for the thickness-wise sparse structural unit (2c₁, 2c₂), a bulk density of 0.03 to 0.10 g/cm³ for the thickness-wise dense structural unit (2d), a ratio of the bulk density of the thickness-wise dense structural unit (2d) to the bulk density of the thickness-wise sparse structural unit (2c₁, 2c₂) of 1.01 to 5, the thickness-wise sparse structural unit (2c₁, 2c₂) has a thickness of 0.5 to 10 cm in the thickness direction of the mattress, the thickness-wise dense structural unit (2d) has a thickness of 2 to 30 cm in the thickness direction of the mattress, and a ratio of the thickness of the thickness-wise dense structural unit (2d) to the thickness of the thickness-wise sparse structural unit (2c₁, 2c₂) is 0.2 to 60, and
the third three-dimensional sparse/ dense structure (3) is provided as an alternately layered configuration of a width-wise sparse structural unit (3e₁, 3e₂, 3e₃) and a width-wise dense structural unit (3f₁, 3f₂) in a width direction of the mattress which is perpendicular to the length direction of the mattress, wherein
the third three-dimensional sparse/ dense structure (3) has a bulk density of 0.009 to 0.07 g/cm³ for the width-wise sparse structural unit (3e₁, 3e₂, 3e₃), a bulk density of 0.0128 to 0.09 g/cm³ for the width-wise dense structural unit (3f₁, 3f₂), a ratio of the bulk density of the width-wise dense structural unit (3f₁, 3f₂) to the bulk density of the width-wise sparse structural unit (3e₁, 3e₂, 3e₃) of 1.01 to 5, the width-wise sparse structural unit (3e₁, 3e₂, 3e₃) has a width of 40 to 100 cm in the width direction of the mattress, the width-wise dense structural unit (3f₁, 3f₂) has a width of 4 to 30 cm in the width direction of the mattress, and a ratio of the width of the width-wise dense structural unit (3f₁, 3f₂) to the width of the width-wise sparse structural unit (3e₁, 3e₂, 3e₃) is 0.02 to 30, and wherein
the width-wise sparse structural unit (3e₁, 3e₂, 3e₃) of the third three-dimensional sparse/ dense structure (3) comprises a first width-wise sparse structural unit (3e₃) and second width-wise sparse structural units (3e₁, 3e₂) that have a bulk density smaller than a bulk density of the first width-wise sparse structural unit (3e₃), and a width of the second width-wise sparse structural units (3e₁, 3e₂) is narrower than a width of the first width-wise sparse structural unit (3e₃), and
the three-dimensional net-like structure (401) has a plurality of three-dimensional intersecting regions formed by the length-wise sparse structural unit (1a₁-1a₉), the thickness-wise sparse structural unit (2c₁-2c₂), and the width-wise sparse structural unit (3e₁, 3e₂, 3e₃).

2. The mattress for a care bed according to claim 1,
wherein the second three-dimensional sparse/ dense structure has the thickness-wise dense structural unit provided as a surface layer.

3. The mattress for a care bed according to claim 1,
wherein the second three-dimensional sparse/ dense structure has the thickness-wise dense structural unit provided as an intermediate layer and the thickness-wise sparse structural unit provided as a surface layer.

4. The mattress for a care bed according to any one of claims 1 to 3, wherein the second width-wise sparse structural units (3e₁, 3e₂) are located on both sides of the first width -wise sparse structural unit (3e₃) the mattress being configured to hold a human body from respective sides to restrict a lateral motion of the human body.

## Patentansprüche

1. Matratze für ein Pflegebett, Folgendes umfassend:
eine dreidimensionale netzartige Struktur (401), konfiguriert aus einer ersten dreidimensionalen lichten/dichten Struktur (1), einer zweiten dreidimensionalen lichten/dichten Struktur (2) und einer dritten dreidimensionalen lichten/dichten Struktur (3), wobei
die dreidimensionale netzartige Struktur (401) eine gekräuselte Federstruktur aufweist, die dadurch ausgebildet ist, dass bewirkt wird, dass Fäden eines thermoplastischen Harzes an Kontaktpunkten unregelmäßig miteinander in Kontakt gebracht werden und sich ineinander verwickeln, und dazu ausgelegt ist, einen Drahtdurchmesser von 0,1 bis 2,0 mm *ϕ* und eine Rohdichte von 0,01 bis 0,15 g/cm³ aufzuweisen,
die erste dreidimensionale lichte/dichte Struktur (1) in einer Längenrichtung der Matratze als abwechselnd geschichtete Konfiguration einer längsweise lichten Struktureinheit (1a₁-1a₉) und einer längsweise dichten Struktureinheit (1b₁-1b₈) bereitgestellt ist, wobei
die erste dreidimensionale lichte/dichte Struktur (1) eine Rohdichte von 0,01 bis 0,08 g/cm³ für die längsweise lichte Struktureinheit (1a₁-1a₉), eine Rohdichte von 0,03 bis 0,10 g/cm³ für die längsweise dichte Struktureinheit (1b₁-1b₈), ein Verhältnis der Rohdichte der längsweisen dichten Struktureinheit (1b₁-1b₈) zur Rohdichte der längsweisen lichten Struktureinheit (1a₁-1a₉) von 1,01 bis 5 aufweist, die längsweise lichte Struktureinheit (1a₁-1a₉) in der Längenrichtung der Matratze eine Länge von 1 bis 50 cm aufweist, die längsweise dichte Struktureinheit (1b₁-1b₈) in der Längenrichtung der Matratze eine Länge von 3 bis 60 cm aufweist und ein Verhältnis der Länge der längsweisen dichten Struktureinheit (1b₁-1b₈) zur Länge der längsweisen lichten Struktureinheit (1a₁-1a₉) 0,1 bis 10 beträgt,
die zweite dreidimensionale lichte/dichte Struktur (2) in einer Dickenrichtung der Matratze als abwechselnd geschichtete Konfiguration einer dickenweise lichten Struktureinheit (2c₁, 2c₂) und einer dickenweise dichten Struktureinheit (2d) bereitgestellt ist, wobei
die zweite dreidimensionale lichte/dichte Struktur (2) eine Rohdichte von 0,01 bis 0,08 g/cm³ für die dickenweise lichte Struktureinheit (2c₁, 2c₂), eine Rohdichte von 0,03 bis 0,10 g/cm³ für die dickenweise dichte Struktureinheit (2d), ein Verhältnis der Rohdichte der dickenweisen dichten Struktureinheit (2d) zur Rohdichte der dickenweisen lichten Struktureinheit (2c₁, 2c₂) von 1,01 bis 5 aufweist, die dickenweise lichte Struktureinheit (2c₁, 2c₂) in der Dickenrichtung der Matratze eine Dicke von 0,5 bis 10 cm aufweist, die dickenweise dichte Struktureinheit (2d) in der Dickenrichtung der Matratze eine Dicke von 2 bis 30 cm aufweist und ein Verhältnis der Dicke der dickenweise dichten Struktureinheit (2d) zur Dicke der dickenweisen lichten Struktureinheit (2c₁, 2c₂) 0,2 bis 60 beträgt, und
die dritte dreidimensionale lichte/dichte Struktur (3) in einer Breitenrichtung der Matratze, die senkrecht zu der Längenrichtung der Matratze ist, als abwechselnd geschichtete Konfiguration einer breitenweise lichten Struktureinheit (3e₁, 3e₂, 3e₃) und einer breitenweise dichten Struktureinheit (3f₁, 3f₂) bereitgestellt ist, wobei
die dritte dreidimensionale lichte/dichte Struktur (3) eine Rohdichte von 0,009 bis 0,07 g/cm³ für die breitenweise lichte Struktureinheit (3e₁, 3e₂, 3e₃), eine Rohdichte von 0,0128 bis 0,09 g/cm³ für die breitenweise dichte Struktureinheit (3f₁, 3f₂), ein Verhältnis der Rohdichte der breitenweisen dichten Struktureinheit (3f₁, 3f₂) zur Rohdichte der breitenweisen lichten Struktureinheit (3e₁, 3e₂, 3e₃) von 1,01 bis 5 aufweist, die breitenweise lichte Struktureinheit (3e₁, 3e₂, 3e₃) in der Breitenrichtung der Matratze eine Breite von 40 bis 100 cm aufweist, die breitenweise dichte Struktureinheit (3f₁, 3f₂) in der Breitenrichtung der Matratze eine Breite von 4 bis 30 cm aufweist und ein Verhältnis der Breite der breitenweisen dichten Struktureinheit (3f₁, 3f₂) zur Breite der breitenweisen lichten Struktureinheit (3e₁, 3e₂, 3e₃) 0,02 bis 30 beträgt und wobei
die breitenweise lichte Struktureinheit (3e₁, 3e₂, 3e₃) der dritten dreidimensionalen lichten/dichten Struktur (3) eine erste breitenweise lichte Struktureinheit (3e₃) und zweite breitenweise lichte Struktureinheiten (3e₁, 3e₂) umfasst, die eine Rohdichte aufweisen, die kleiner ist als die Rohdichte der ersten breitenweisen lichten Struktureinheit (3e₃), und wobei die Breite der zweiten breitenweisen lichten Struktureinheiten (3e₁, 3e₂) schmäler ist als die Breite der ersten breitenweisen lichten Struktureinheit (3e₃), und
die dreidimensionale netzartige Struktur (401) eine Vielzahl von dreidimensionalen sich schneidenden Bereichen aufweist, die durch die längsweise lichten Struktureinheiten (1a₁-1a₉), die dickenweise lichte Struktureinheit (2c₁, 2c₂) und die breitenweise lichte Struktureinheit (3e₁, 3e₂, 3e₃) ausgebildet sind.

2. Matratze für ein Pflegebett nach Anspruch 1,
wobei die zweite dreidimensionale lichte/dichte Struktur die dickenweise dichte Struktureinheit, welche als Oberflächenschicht bereitgestellt ist, aufweist.

3. Matratze für ein Pflegebett nach Anspruch 1,
wobei die zweite dreidimensionale lichte/dichte Struktur die dickenweise dichte Struktureinheit, welche als Zwischenschicht bereitgestellt ist, und die dickenweise lichte Struktureinheit, welche als Oberflächenschicht bereitgestellt ist, aufweist.

4. Matratze für ein Pflegebett nach einem der Ansprüche 1 bis 3,
wobei die zweiten breitenweisen lichten Struktureinheiten (3e₁, 3e₂) auf beiden Seiten der ersten breitenweisen lichten Struktureinheit (3e₃) angeordnet sind, wobei die Matratze dazu ausgelegt ist, einen menschlichen Körper von jeweiligen Seiten zu halten, um eine Seitenbewegung des menschlichen Körpers einzuschränken.

## Revendications

1. Matelas pour un lit de soins, comprenant
une structure tridimensionnelle de type filet (401) configurée à partir d'une première structure tridimensionnelle parsemée/dense (1), et d'une deuxième structure tridimensionnelle parsemée/dense (2) et d'une troisième structure tridimensionnelle parsemée/dense (3), dans lequel
la structure tridimensionnelle de type filet (401) présente une structure de ressorts enroulés formée en amenant des filaments d'une résine thermoplastique à être mis en contact et enchevêtrés les uns avec les autres de manière irrégulière au niveau de points de contact, et est configurée pour présenter un diamètre de fil Φ Tapez une équation ici.de 0,1 à 2,0 mm et une densité apparente de 0,01 à 0,15 g/cm³,
la première structure tridimensionnelle parsemée/dense (1) étant fournie sous la forme d'une configuration en couches alternées d'une unité structurelle parsemée dans le sens de la longueur (1a₁-1a₉) et d'une unité structurelle dense dans le sens de la longueur (1b₁-1b₈) dans une direction de longueur du matelas, dans lequel
la première structure tridimensionnelle parsemée/dense (1) présente une densité apparente de 0,01 à 0,08 g/cm³ pour l'unité structurelle parsemée dans le sens de la longueur (1a₁-1a₉), une densité apparente de 0,03 à 0,10 g/cm³ pour l'unité structurelle dense dans le sens de la longueur (1b₁-1b₈), un rapport de la densité apparente de l'unité structurelle dense dans le sens de la longueur (1b₁-1b₈) à la densité apparente de l'unité structurelle parsemée dans le sens de la longueur (1a₁-1a₉) de 1,01 à 5, l'unité structurelle parsemée dans le sens de la longueur (1a₁-1a₉) présente une longueur de 1 à 50 cm dans la direction de longueur du matelas, l'unité structurelle dense dans le sens de la longueur (1b₁-1b₈) présente une longueur de 3 à 60 cm dans la direction de longueur du matelas, et un rapport de la longueur de l'unité structurelle dense dans le sens de la longueur (1b₁-1b₈) à la longueur de l'unité structurelle parsemée dans le sens de la longueur (1a₁-1a₉) est de 0,1 à 10,
la deuxième structure tridimensionnelle parsemée/dense (2) étant fournie sous la forme d'une configuration en couches alternées d'une unité structurelle parsemée dans le sens de l'épaisseur (2c₁, 2c₂) et d'une unité structurelle dense dans le sens de l'épaisseur (2d) dans une direction d'épaisseur du matelas, dans lequel
la deuxième structure tridimensionnelle parsemée/dense (2) présente une densité apparente de 0,01 à 0,08 g/cm³ pour l'unité structurelle parsemée dans le sens de l'épaisseur (2c₁, 2c₂), une densité apparente de 0,03 à 0,10 g/cm³ pour l'unité structurelle dense dans le sens de l'épaisseur (2d), un rapport de la densité apparente de l'unité structurelle dense dans le sens de l'épaisseur (2d) à la densité apparente de l'unité structurelle parsemée dans le sens de l'épaisseur (2c₁, 2c₂) de 1,01 à 5, l'unité structurelle parsemée dans le sens de l'épaisseur (2c₁, 2c₂) présente une épaisseur de 0,5 à 10 cm dans la direction d'épaisseur du matelas, l'unité structurelle dense dans le sens de l'épaisseur (2d) présente une épaisseur de 2 à 30 cm dans la direction d'épaisseur du matelas, et un rapport de l'épaisseur de l'unité structurelle dense dans le sens de l'épaisseur (2d) à l'épaisseur de l'unité structurelle parsemée dans le sens de l'épaisseur (2c₁, 2c₂) est de 0,2 à 60, et
la troisième structure tridimensionnelle parsemée/dense (3) est fournie sous la forme d'une configuration en couches alternées d'une unité structurelle parsemée dans le sens de la largeur (3e₁, 3e ₂, 3e₃) et d'une unité structurelle dense dans le sens de la largeur (3f₁, 3f₂) dans une direction de largeur du matelas qui est perpendiculaire à la direction de longueur du matelas, dans lequel
la troisième structure tridimensionnelle parsemée/dense (3) présente une densité apparente de 0,009 à 0,07 g/cm³ pour l'unité structurelle parsemée dans le sens de la largeur (3e₁, 3e₂, 3e₃), une densité apparente de 0,0128 à 0,09 g/cm³ pour l'unité structurelle dense dans le sens de la largeur (3f₁, 3f₂), un rapport de la densité apparente de l'unité structurelle dense dans le sens de la largeur (3f₁, 3f₂) à la densité apparente de l'unité structurelle parsemée dans le sens de la largeur (3e₁, 3e₂, 3e₃) de 1,01 à 5, l'unité structurelle parsemée dans le sens de la largeur (3e₁, 3e₂, 3e₃) présente une largeur de 40 à 100 cm dans la direction de largeur du matelas, l'unité structurelle dense dans le sens de la largeur (3f₁, 3f₂) présente une largeur de 4 à 30 cm dans la direction de largeur du matelas, et un rapport de la largeur de l'unité structurelle dense dans le sens de la largeur (3f₁, 3f₂) à la largeur de l'unité structurelle parsemée dans le sens de la largeur (3e₁, 3e₂, 3e₃) est de 0,02 à 30, et dans lequel
l'unité structurelle parsemée dans le sens de la largeur (3e₁, 3e₂, 3e₃) de la troisième structure tridimensionnelle parsemée/dense (3) comprend une première unité structurelle parsemée dans le sens de la largeur (3e₃) et une deuxième unité structurelle parsemée dans le sens de la largeur (3e₁, 3e₂) qui présente une densité apparente inférieure à une densité apparente de la première unité structurelle parsemée dans le sens de la largeur (3e₃), et une largeur des deuxièmes unités structurelles parsemées dans le sens de la largeur (3e₁, 3e₂) est plus étroite qu'une largeur de la première unité structurelle parsemée dans le sens de la largeur (3e₃), et
la structure tridimensionnelle de type filet (401) présente une pluralité de régions d'intersection tridimensionnelles formées par l'unité structurelle parsemée dans le sens de la longueur (1a₁-1a₉), l'unité structurelle parsemée dans le sens de l'épaisseur (2c₁-2c₂) et l'unité structurelle parsemée dans le sens de la largeur (3e₁, 3e₂, 3e₃).

2. Matelas pour un lit de soins selon la revendication 1,
dans lequel la deuxième structure tridimensionnelle parsemée/dense présente l'unité structurelle dense dans le sens de l'épaisseur fournie en tant que couche de surface.

3. Matelas pour un lit de soins selon la revendication 1,
dans lequel la deuxième structure tridimensionnelle parsemée/dense présente l'unité structurelle dense dans le sens de l'épaisseur fournie en tant que couche intermédiaire et l'unité structurelle parsemée dans le sens de l'épaisseur fournie en tant que couche de surface.

4. Matelas pour un lit de soins selon l'une quelconque des revendications 1 à 3, dans lequel les secondes unités structurelles parsemées dans le sens de la largeur (3e₁, 3e₂) sont situées des deux côtés de la première unité structurelle parsemée dans le sens de la largeur (3e₃), le matelas étant configuré pour maintenir un corps humain à partir de côtés respectifs pour restreindre un mouvement latéral du corps humain.
